# EUROPÄISCHE PATENTANMELDUNG

(11) **EP 3 659 854 A1**
(43) Veröffentlichungstag der Anmeldung: **03.06.2020**
(21) Anmeldenummer: 19211697.8
(22) Anmeldetag: 27.11.2019
(51) Int. Cl.: B60L 50/50, B60L 53/53, B60L 53/57, B60L 53/80, B60L 58/18, B60P 1/54, H02J 7/00

(54) **VERFAHREN ZUR NUTZUNG ZUMINDEST EINER LADEEINHEIT, FAHRZEUG, LADEEINHEIT, SOWIE TRANSPORTSYSTEM**

(30) Priorität: 27.11.2018 DE 102018129905
(71) Anmelder: Volkswagen AG, 38440 Wolfsburg (DE)
(72) Erfinder: Koch, Andreas R., 30853 Langenhagen (DE); Müller, Reinhard, 38104 Braunschweig (DE)
(74) Vertreter: Patentanwälte Bals & Vogel

(57) **Zusammenfassung**

Die Erfindung betrifft ein Verfahren (100) zur Nutzung zumindest einer Ladeeinheit (20), die zum stationären Laden von Elektrofahrzeugen (2) geeignet ist, umfassend die folgenden Schritte:
- Aufnahme (101) der Ladeeinheit (20) in einem Aufnahmebereich (12) eines Fahrzeugs (10),
- Mobiles Betreiben (102) der Ladeeinheit (20) in einem mobilen Betriebsmodus zur Versorgung einer elektrischen Antriebseinheit (11) des Fahrzeugs (10) mit elektrischer Energie durch die Ladeeinheit (20).

Ferner betrifft die Erfindung ein Fahrzeug (10), eine Ladeeinheit (20) sowie ein Transportsystem (1).

## Beschreibung

Die Erfindung betrifft ein Verfahren zur Nutzung zumindest einer Ladeeinheit, ein Fahrzeug, insbesondere einen Lastkraftwagen, eine Ladeeinheit sowie ein Transportsystem.

Es ist bekannt, dass Elektromobilität, insbesondere sowohl im Individualverkehr, als auch im Logistiksektor, einen immer größeren Stellenwert erlebt. Je mehr Elektrofahrzeuge auf den Straßen zugelassen werden, umso mehr steigt jedoch auch der Bedarf einer funktionierenden Ladeinfrastruktur für Elektrofahrzeuge sowie eines möglichst emissionsfreien Betriebs der Ladeinfrastruktur. Wenn die Elektrofahrzeuge beispielsweise am konventionellen Stromnetz geladen werden sollen, können sich lange Ladezeiten ergeben. Das Elektrofahrzeug ist somit während der Ladezeit an den Platz am Stromnetz gebunden. Um auch unterwegs ein Laden von Elektrofahrzeugen zu ermöglichen, ist jedoch eine aufwendige Ladeinfrastruktur notwendig. Für eine derartige Ladeinfrastruktur müssen Kabel an Ladepunkte verlegt werden, an denen die Elektrofahrzeuge zum Laden halten können. Insbesondere für LKW können hier jedoch auch bei hohen Ladeströmen noch immer signifikante Stillstandzeiten aufgrund eines hohen Energiebedarfs und daraus resultierender langer Ladeperioden notwendig sein. Darüber hinaus weist eine solche Ladeinfrastruktur einen hohen Investitionsbedarf auf.

Ein alternatives Konzept einer Ladeinfrastruktur ist beispielsweise aus der DE 20 2010 017 625 U1 bekannt. Dabei fahren einzelne Transporteinheiten entlang einer Fahrstrecke unterschiedliche Ladepunkte an, an denen eine automatische Aufladung erfolgt. Dabei ist jedoch von Nachteil, dass dies auch ein überarbeitetes Verkehrskonzept und weiterhin eine ausgebaute, stationäre Ladeinfrastruktur erfordert.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, eine Nutzung einer Ladeeinheit vorzugsweise zum stationären Laden von Elektrofahrzeugen, insbesondere hinsichtlich eines Entstehens von Emissionen und/oder Kosten innerhalb einer Ladeinfrastruktur, zu verbessern.

Die voranstehende Aufgabe wird gelöst durch ein Verfahren mit den Merkmalen des Anspruchs 1, ein Fahrzeug mit den Merkmalen des Anspruchs 6, eine Ladeeinheit mit den Merkmalen des Anspruchs 12 sowie ein Transportsystem mit den Merkmalen des Anspruchs 15. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben worden sind, selbstverständlich auch im Zusammenhang mit dem erfindungsgemäßen Fahrzeug, der erfindungsgemäßen Ladeeinheit und/oder dem erfindungsgemäßen Transportsystem und jeweils umgekehrt, so dass bezüglich der Offenbarung zu den einzelnen Erfindungsaspekten stets wechselseitig Bezug genommen wird bzw. werden kann.

Erfindungsgemäß umfasst das Verfahren zur Nutzung zumindest einer Ladeeinheit, die insbesondere zum stationären Laden von Elektrofahrzeugen geeignet ist, die folgenden Schritte:
- Aufnahme der Ladeeinheit in einem Aufnahmebereich eines Fahrzeugs,
- Mobiles Betreiben der Ladeeinheit in einem mobilen Betriebsmodus zur Versorgung einer elektrischen Antriebseinheit des Fahrzeugs mit elektrischer Energie durch die Ladeeinheit,
- Absetzen der Ladeeinheit vom Fahrzeug.

Bei der Nutzung der zumindest einen Ladeeinheit kann es sich insbesondere um den Betrieb der Ladeeinheit und/oder mehrerer Ladeeinheiten und/oder einer Ladeinfrastruktur handeln. Unter dem Laden der Elektrofahrzeuge kann vorteilhafterweise eine Stromversorgung von internen Fahrzeugbatterien der Elektrofahrzeuge verstanden werden, insbesondere so dass die jeweilige Ladekapazität der Fahrzeugbatterien aufgefüllt wird. Vorzugsweise kann durch die Ladeeinheit ein Ladestrom zur Verfügung gestellt werden. Die Ladeeinheit kann dazu einen Energiespeicher, beispielsweise in Form einer Batterie, insbesondere einer Lithium-Ionen-Batterie, aufweisen. Ferner ist die Ladeeinheit vorzugsweise zum stationären, insbesondere autonomen, Laden von Elektrofahrzeugen geeignet. Wird diese somit außerhalb des Fahrzeugs stationär betrieben, ist die Ladeeinheit insbesondere zum Laden einer Fahrzeugbatterie geeignet. Dazu kann die Ladeeinheit zusätzlich zum Energiespeicher beispielsweise einen Ladeanschluss zur Kopplung mit einem Elektrofahrzeug aufweisen. Vorzugsweise kann die elektrische Ladeeinheit als mobile Ladesäule oder als Teil einer mobilen Ladesäule ausgebildet sein, wobei die Ladesäule insbesondere vollständig auf das Fahrzeug verladen werden kann. Der Aufnahmebereich kann beispielsweise als Ladefläche ausgestaltet sein und/oder auf die Form der Ladeeinheit abgestimmt sein. Die Aufnahme der Ladeeinheit in dem Aufnahmebereich kann beispielsweise ein Platzieren der Ladeeinheit auf der Ladefläche umfassen. Beim Betreiben der Ladeeinheit im mobilen Betriebsmodus wird die Ladeeinheit vorzugsweise als Fahrzeugbatterie betrieben, welche der Antriebseinheit insbesondere direkt, d.h. ohne Zwischenspeicher, die Energie zur Verfügung stellen kann. Der mobile Betriebsmodus kann umfassen, dass die elektrische Energie der elektrischen Antriebseinheit des Fahrzeugs entsprechend eines jeweils aktuellen Energiebedarfs, insbesondere direkt, zur Verfügung gestellt wird. Die elektrische Antriebseinheit kann einen Elektromotor oder mehrere Elektromotoren zum Antrieb des Fahrzeugs umfassen. Vorzugsweise können neben der elektrischen Antriebseinheit weitere Verbraucher des Fahrzeugs im mobilen Betriebsmodus durch die Ladeeinheit mit elektrischer Energie versorgt werden. Ist das Fahrzeug an seinem Ziel oder Zwischenziel, wie z.B. dem Einsatzort der Ladeeinheit zum stationären Laden, angekommen, kann die Ladeeinheit abgesetzt werden. Dadurch kann die Ladeeinheit beispielsweise gegen eine vollständig geladene Ladesäule ausgetauscht werden und/oder unabhängig von dem Betrieb des Fahrzeugs geladen werden. Insbesondere kann das Absetzen der Ladeeinheit zumindest teilweise automatisiert durch das Fahrzeug, z.B. durch den Einsatz eines Bordkrans, erfolgen. Es ist jedoch ebenfalls denkbar, dass ein Hubwagen dazu eingesetzt wird, insbesondere wenn dieser für die Beladung des Fahrzeugs ohnehin am Fahrzeug vorgesehen ist.

Es ist insbesondere denkbar, dass vor der Aufnahme der Ladeeinheit ein Absetzen einer weiteren Ladeeinheit erfolgt und/oder nach dem Absetzen der Ladeeinheit eine Aufnahme einer weiteren Ladeeinheit. Somit kann das Fahrzeug durch den Austausch der Ladeeinheit in Betrieb bleiben, insbesondere, wenn die neu aufgenommene Ladeeinheiten einen höheren Ladestand aufweist.

Somit kann durch das erfindungsgemäße Verfahren eine hohe Reichweite für das Fahrzeug erzielt werden, ohne dass die Bereitstellung der Ladeinfrastruktur hohe Investitionskosten oder lange Ladezeiten nach sich zieht. Gleichzeitig kann die Ladeeinheit beim stationären Laden beispielsweise dazu eingesetzt werden an einem dezentralen Ort selbst als Teil einer Ladeinfrastruktur zu dienen, so dass Elektrofahrzeuge ihre Fahrzeugbatterie an der Ladeeinheit aufladen können. Die Mobilität der Ladeeinheit ermöglicht dabei wiederum einen einfachen Austausch, wenn der Ladezustand abnimmt und gleichzeitig eine Platzierung an Orten, die zum schnellen Laden von Elektrofahrzeugen nicht ausreichend an das Stromnetz angebunden sind.

Vorzugsweise kann bei einem erfindungsgemäßen Verfahren ferner vorgesehen sein, dass das Verfahren folgenden Schritt umfasst:
- Stationäres Betreiben der Ladeeinheit in einem stationären Betriebsmodus, in welchem elektrische Energie der Ladeeinheit einem Elektrofahrzeug zur Verfügung gestellt wird.

Das stationäre Betreiben der Ladeeinheit kann unabhängig von dem Fahrzeug durchgeführt werden. Dadurch kann eine Ladeinfrastruktur zum Laden von Elektrofahrzeugen in einfacher Art und Weise bereitgestellt und/oder dynamisch angepasst werden. Dazu kann ein Ladesteuergerät der Ladeeinheit den stationären Betriebsmodus aufweisen, in welchem die Energieabgabe auf das Laden von Fahrzeugbatterien der Elektrofahrzeuge angepasst ist. Vorzugsweise kann die Energieabgabe im stationären Betriebsmodus über einen Ladeanschluss erfolgen. Vorzugsweise kann der Ladeanschluss als Ladestecker ausgebildet sein. Dazu kann der Ladeanschluss einen Normanschluss zur Kopplung mit den Elektrofahrzeugen aufweisen.

Weiterhin ist es bei einem erfindungsgemäßen Verfahren denkbar, dass die Ladeeinheit bei der Aufnahme durch das Fahrzeug automatisch mit einer Steuereinheit und/oder der elektrischen Antriebseinheit des Fahrzeugs verbunden wird. Dazu kann beispielsweise ein Anschlusselement am Fahrzeug und ein Gegenanschlusselement an der Ladeeinheit vorgesehen sein. Wird die Ladeeinheit mit dem Gegenanschlusselement am Anschlusselement platziert, kann eine automatische Verbindung hergestellt werden. Dazu kann beispielsweise das Ladesteuergerät der Ladeeinheit der Steuereinheit des Fahrzeuges ein Signal übermitteln, dass die Ladeeinheit sich im Aufnahmebereich befindet und im mobilen Betriebsmodus genutzt werden kann. Durch die Signalübermittlung kann das Anschlusselement und/oder das Gegenanschlusselement freiliegen, ohne dass eine Gefahr der Fehlkontaktierung oder für den Benutzer besteht. Erst nach der Signalübermittlung wird vorzugsweise elektrische Energie für die Versorgung der Antriebseinheit am Gegenanschlusselement bereitgestellt.

Weiterhin kann bei einem erfindungsgemäßen Verfahren vorteilhafterweise vorgesehen sein, dass weitere Ladeeinheiten aufgenommen und zur Energieversorgung der Antriebseinheit des Fahrzeugs mobil betrieben werden, wobei während des mobilen Betreibens ein Energiemanagement der Ladeeinheiten, insbesondere sämtlicher aufgenommenen Ladeeinheiten, durchgeführt wird. Insbesondere umfasst das mobile Betreiben der Ladeeinheiten ein Betreiben im mobilen Betriebsmodus. Somit kann die Reichweite des Fahrzeugs vergrößert werden und/oder das Fahrzeug kann als Verteilerfahrzeug zur Wartung der durch stationär betriebene Ladeeinheiten aufgebauten Ladeinfrastruktur ausgestaltet sein. Durch das Energiemanagement kann das Fahrzeug auch bei der Verteilung der Ladeeinheiten an die dezentralen Ladestellen über die Ladeeinheiten mit Energie versorgt werden, ohne dass eine zusätzliche Fahrzeugbatterie oder ein Verbrennungsmotor notwendig ist. Somit kann Gewicht beim Fahrzeug eingespart werden und/oder Emissionen können reduziert werden. Weiterhin können beim Transport mehrerer Ladeeinheiten die Ladeeinheiten gleichmäßig zur Energieversorgung der Antriebseinheit herangezogen werden, so dass deren einzelne Ladezustände am jeweiligen Einsatzort zum stationären Betreiben der Ladeeinheiten noch ausreichend sind. Alternativ können die Ladeeinheiten nacheinander zur Energieversorgung der Antriebseinheit herangezogen werden, wenn beispielsweise unterschiedliche Anforderungen an die Ladezustände am Einsatzort existieren oder eine Restenergie der jeweiligen Ladeeinheit aufgebraucht werden soll.

Im Rahmen der Erfindung ist es ferner denkbar, dass die Ladeeinheiten einen Hauptladezustand, in welchem ein stationärer Ladebetrieb möglich ist, und einen Restladezustand, in welchem ein Grenzwert des Hauptladezustands für den stationären Ladebetrieb erreicht oder unterschritten ist, aufweisen, wobei das Energiemanagement der Ladeeinheiten ein Betreiben der elektrischen Antriebseinheit im Hauptladezustand und/oder im Restladezustand ermöglicht. Dadurch können die Ladeeinheiten im Hauptladezustand an die jeweiligen Zielorte zur Versorgung der dezentralen Ladeinfrastruktur verteilt werden. Wird durch die Nutzung der Ladeeinheiten im stationären Ladebetrieb der Grenzwert erreicht oder unterschritten kann die Ladeeinheit z.B. über eine Mobilfunkverbindung melden, dass der Restladezustand erreicht ist. Dadurch kann die Abholung der Ladeeinheit durch das Fahrzeug initiiert werden. Vorzugsweise kann der Grenzwert z.B. 20% des maximalen Ladezustands betragen, wobei die Ladeeinheit beispielsweise eine Kapazität von 440 kWh aufweisen kann. Durch die noch vorhandene Energiemenge im Restladezustand kann ferner sichergestellt sein, dass auch anschließend noch Elektrofahrzeuge geladen werden können bis die Abholung erfolgt ist. Zusätzlich oder alternativ kann die vorhandene Energiemenge zum Betrieb des Fahrzeugs bei der Abholung genutzt werden. Vorzugsweise kann das Fahrzeug somit eine aufgeladene Ladeeinheit an den dezentralen Ladeort bringen und dabei zumindest teilweise die Antriebseinheit durch deren elektrische Energie versorgt werden. Beim Austausch kann ferner die Restenergie noch ausreichen, um das Fahrzeug zu einem zentralen Ladeort für die Ladeeinheiten zu bringen.

Weiterhin ist erfindungsgemäß ein Fahrzeug beansprucht, das eine elektrische Antriebseinheit zum Antreiben des Fahrzeugs und einen Aufnahmebereich zur Aufnahme einer Ladeeinheit zum stationären Laden von Elektrofahrzeugen aufweist. Das Fahrzeug weist ferner ein Anschlusselement zum Verbinden der Ladeeinheit mit der elektrischen Antriebseinheit auf, so dass elektrische Energie der Ladeeinheit durch die elektrische Antriebseinheit nutzbar ist, wenn sich die Ladeeinheit im Aufnahmebereich befindet.

Bei dem Fahrzeug kann es sich somit vorzugsweise um ein rein elektrisch angetriebenes Fahrzeug handeln. Alternativ ist es denkbar, dass das Fahrzeug als Hybridfahrzeug ausgestaltet ist und einen zusätzlichen Verbrennungsmotor aufweist. Insbesondere kann der Verbrennungsmotor als Range Extender ausgestaltet sein. Ferner kann es sich bei dem Fahrzeug um ein Transportfahrzeug, insbesondere einen Lastkraftwagen, handeln. Weiterhin ist es jedoch denkbar, dass es sich bei dem Fahrzeug um ein Schiff, ein Schienenfahrzeug oder dergleichen handelt. Die Ladeeinheit kann von dem Fahrzeug im Aufnahmebereich transportiert werden. Somit eignet sich das Fahrzeug besonders als Verteilerfahrzeug zum Verteilen der Ladeeinheiten an dezentralen Orten der Ladeinfrastruktur. Ferner ist es denkbar, dass es sich bei dem Fahrzeug um einen LKW handelt, der durch die Aufnahme der Ladeeinheit die gesamte oder nahezu die gesamte Kapazität der Ladeeinheit zur Verfügung hat. Die Ladeeinheit zum stationären Laden kann dabei eine hohe Kapazität, insbesondere von über 400 kWh, vorzugsweise von 440kWh, zur Verfügung stellen, um möglichst viele Elektrofahrzeuge stationär laden zu können. Dadurch können durch das die Ladeeinheit aufnehmende Fahrzeug hohe Reichweiten auch dann erzielt werden, wenn das Fahrzeug beispielsweise eine hohe Nutzlast trägt, bei welcher eine Fahrzeugbatterie eines Elektro-PKW nur eine geringere Reichweite ermöglichen würde. Somit bringt ein erfindungsgemäßes Fahrzeug die gleichen Vorteile mit sich, wie sie bereits ausführlich mit Bezug auf ein erfindungsgemäßes Verfahren beschrieben worden sind.

Im Rahmen der Erfindung ist es ferner denkbar, dass der Aufnahmebereich einen Verriegelungsmechanismus zum Sichern der Ladeeinheit aufweist. Der Verriegelungsmechanismus kann zumindest teilweise automatisiert ausgebildet sein, so dass eine Aufnahme der Ladeeinheit vereinfacht ist. Insbesondere kann die Ladeeinheit durch den Verriegelungsmechanismus während der Fahrt sicherbar sein. Dazu kann der Verriegelungsmechanismus z.B. Sicherungsklauen aufweisen, welche die Ladeeinheit am Aufnahmebereich durch Eingreifen in Ausnehmungen in einem Gehäuse der Ladeeinheit insbesondere formschlüssig fixieren.

Weiterhin kann bei einem erfindungsgemäßen Fahrzeug vorgesehen sein, dass das Anschlusselement im Aufnahmebereich angeordnet ist, insbesondere wobei das Anschlusselement bei Aufnahme der Ladeeinheit im Aufnahmebereich automatisch mit der Ladeeinheit verbunden wird. Durch die Anordnung des Anschlusselementes im Aufnahmebereich kann eine Verbindung der Ladeeinheit mit der elektrischen Antriebseinheit vereinfacht sein. So kann das Anschlusselement beispielsweise unabhängig von einem Ladeanschluss der Ladeeinheit zum stationären Laden der Elektrofahrzeuge sein. Insbesondere kann das Anschlusselement Kontakte umfassen, die vorzugsweise aus am Aufnahmebereich hervorstehen. Dadurch kann eine einfache Kontaktierung eines Gegenanschlusselementes der Ladeeinheit bei der Aufnahme der Ladeeinheit im Aufnahmebereich ermöglicht sein. Insbesondere kann dadurch ferner eine automatische Verbindung der Ladeeinheit mit dem Anschlusselement vereinfacht sein. Somit kann die Aufnahme der Ladeeinheit insgesamt vereinfacht und/oder teilweise oder vollständig automatisiert ausgestaltet sein.

Vorteilhafterweise kann bei einem erfindungsgemäßen Fahrzeug ein Bordkran vorgesehen sein, durch welchen die Ladeeinheit im Aufnahmebereich platzierbar ist, insbesondere wobei der Bordkran eine Sensoreinheit zur Unterstützung einer Kopplung des Bordkrans mit der Ladeeinheit aufweist. Der Bordkran kann durch eine zusätzliche Energieversorgung betreibbar sein und/oder mit der Ladeeinheit oder weiteren, bereits auf dem Fahrzeug verladene Ladeeinheiten koppelbar sein. Durch den Bordkran kann das Fahrzeug die Ladeeinheit eigenständig aufnehmen und/oder absetzen. Über die Sensoreinheit kann eine zumindest teilweise Automatisierung des Bordkrans vorgesehen sein. Insbesondere kann die Sensoreinheit einen optischen Sensor und/oder einen Näherungssensor umfassen, um dem Fahrer des Fahrzeugs eine Unterstützung beim Verladen der Ladeeinheit zu bieten. So ist es denkbar, dass der gesamte Verladevorgang über die Sensoreinheit von der Fahrerkabine gesteuert werden kann. Dadurch kann sich die Verladezeit verkürzen und/oder Beschädigungen aufgrund eines nicht korrekten Verladevorgangs können vermieden werden.

Weiterhin können bei einem erfindungsgemäßen Fahrzeug vorteilhafterweise mehrere Aufnahmebereiche zur Aufnahme mehrerer Ladeeinheiten vorgesehen sein, wobei jedem Aufnahmebereich ein Anschlusselement zugeordnet ist. Dadurch können mehrere Ladeeinheiten durch das Fahrzeug transportiert werden. Durch die Anschlusselemente kann es ferner ermöglicht sein, dass mehrere zugeladene Ladeeinheiten in einem mobilen Betriebsmodus elektrische Energie für die Antriebseinheit des Fahrzeugs zur Verfügung stellen können. Insbesondere können die Anschlusselemente an den Aufnahmebereichen vorgesehen sein, um eine einfache und/oder automatisierte Kontaktierung mit Gegenanschlusselementen der Ladeeinheiten zu ermöglichen.

Im Rahmen der Erfindung ist es ferner denkbar, dass eine Steuereinheit vorgesehen ist, die zum Energiemanagement der Ladeeinheit ausgebildet ist, insbesondere wobei durch das Energiemanagement ein Betreiben der elektrischen Antriebseinheit in einem Hauptladezustand der Ladeeinheit, in welchem ein stationärer Ladebetrieb möglich ist, und/oder in einem Restladezustand der Ladeeinheit, in welchem ein Grenzwert des Hauptladezustands für den stationären Ladebetrieb unterschritten ist, ermöglicht ist. Somit kann es durch das Energiemanagement gewährleistet sein, dass die Ladeeinheit für den Betrieb der Antriebseinheit nutzbar ist, wenn diese voll geladen ist und beispielsweise zu einem dezentralen Einsatzort befördert werden soll. Weiterhin kann durch das Energiemanagement ermöglicht sein, die Ladeeinheit für den Betrieb der Antriebseinheit zu nutzen, wenn diese nur noch schwach geladen ist. Besonders bevorzugt kann die Steuereinheit zum Energiemanagement mehrerer Ladeeinheiten ausgebildet sein. Dabei kann vorgesehen sein, dass das Energiemanagement für den Hauptladezustand eine gleichmäßige Stromabnahme von der Ladeeinheiten durchführt, während das Energiemanagement für den Restladezustand einzelne Ladeeinheiten zum Betrieb der Antriebseinheiten zu- und abschalten kann. Alternativ ist es denkbar, dass das Energiemanagement ladeeinheitsseitig vorgesehen ist, wobei beispielsweise ein Ladesteuergerät der Ladeeinheit zum Energiemanagement ausgebildet sein kann.

Weiterhin kann bei einem erfindungsgemäßen Fahrzeug vorgesehen sein, dass die Steuereinheit dazu ausgebildet ist, eine Energierückgewinnung zum Laden der Ladeeinheit während der Fahrt zu ermöglichen und/oder ein erfindungsgemäßes Verfahren durchzuführen. Unter der Energierückgewinnung kann vorzugsweise eine Energierekuperation, insbesondere durch Bremsvorgänge des Fahrzeugs oder dergleichen, verstanden werden. So ist es denkbar, dass das Anschlusselement zum bidirektionalen Stromfluss ausgebildet ist und somit ein Laden eines Energiespeichers der Ladeeinheit während der Fahrt ermöglicht. Dadurch kann der Energieverlust der Ladeeinheit durch den Betrieb des Fahrzeugs insgesamt reduziert sein, so dass dieses beispielsweise eine höhere Reichweite erzielen kann und/oder am dezentralen Einsatzort der Ladeeinheit eine größere Kapazität zum stationären Laden von Elektrofahrzeugen zur Verfügung steht.

Weiterhin ist erfindungsgemäß eine Ladeeinheit zum stationären Laden von Elektrofahrzeugen beansprucht. Die Ladeeinheit weist einen Energiespeicher zum Bereitstellen von elektrischer Energie und einen Ladeanschluss zur Kopplung des Energiespeichers mit einem Elektrofahrzeug, insbesondere einer Fahrzeugbatterie eines Elektrofahrzeugs, auf. Ferner umfasst die Ladeeinheit ein Ladesteuergerät zum Steuern einer Energieabgabe des Energiespeichers an das Elektrofahrzeug. Das Ladesteuergerät weist dabei einen stationären Betriebsmodus auf, in welchem Elektrofahrzeugen am Ladeanschluss elektrische Energie aus dem Energiespeicher zur Verfügung stellbar ist. Ferner ist vorgesehen, dass die Ladeeinheit durch ein Fahrzeug, insbesondere ein erfindungsgemäßes Fahrzeug, aufnehmbar ist und das Ladesteuergerät einen mobilen Betriebsmodus aufweist, in welchem der Energiespeicher zum Betreiben einer elektrischen Antriebseinheit des Fahrzeugs dient.

Unter der Ladeeinheit kann daher insbesondere eine elektrische Ladeeinheit verstanden werden. Vorzugsweise kann die Ladeeinheit somit zum Betrieb als Fahrzeugbatterie des die Ladeeinheit aufnehmenden Fahrzeugs eingesetzt werden. Vorzugsweise handelt es sich bei dem Energiespeicher um eine Batterie, insbesondere eine Lithium-Ionen-Batterie. Somit ergeben sich für die Ladeeinheit sämtliche Vorteile, wie sie bereits ausführlich mit Bezug auf ein erfindungsgemäßes Verfahren und/oder ein erfindungsgemäßes Fahrzeug beschrieben worden sind. Insbesondere kann die Ladeeinheit zur Durchführung eines erfindungsgemäßen Verfahrens eingesetzt werden und/oder durch ein erfindungsgemäßes Fahrzeug aufnehmbar sein.

Vorzugsweise kann die Ladeeinheit als eine mobile, insbesondere autonome, Ladesäule oder als Teil einer mobilen Ladesäule ausgebildet sein. Insbesondere ist die Ladeeinheit an einem dezentralen Einsatzort zum stationären Laden von Elektrofahrzeugen aufstellbar. Bei der Platzierung und/oder Abholung ist gleichzeitig ermöglicht, dass das Verteilerfahrzeug zumindest teilweise durch die Ladeeinheit betrieben wird. Somit kann durch die Ladeeinheit zum einen eine vorteilhafte Möglichkeit gegeben sein eine dezentrale Ladeinfrastruktur für Elektrofahrzeuge zu schaffen und zum anderen kann durch den mobilen Betriebsmodus eine emissionsreduzierte und kostengünstige Verteilung von Ladeeinheiten ermöglicht sein und/oder beispielsweise einem elektrisch betriebenen Lastkraftwagen dezentral eine hohe Energiekapazität zur Verfügung stellbar sein.

Im Rahmen der Erfindung ist es ferner denkbar, dass die Ladeeinheit ein Gegenanschlusselement zum Verbinden mit einem Anschlusselement des Fahrzeugs aufweist, so dass der mobile Betriebsmodus über das Gegenanschlusselement betreibbar ist. Das Gegenanschlusselement kann in den Ladeanschluss integriert sein oder separat zum Ladeanschluss ausgebildet sein. Insbesondere kann das Gegenanschlusselement an einer Unterseite der Ladeeinheit angeordnet sein, so dass dieses vorteilhaft mit dem Anschlusselement des Fahrzeugs, insbesondere zumindest teilweise automatisiert, verbindbar ist. Insbesondere kann das Gegenanschlusselement Kontakte umfassen, an denen durch das Ladesteuergerät nur dann eine Spannung zur Abgabe von elektrischer Energie aus dem Energiespeicher anliegt, wenn das Ladesteuergerät eine Steuereinheit des Fahrzeugs detektiert hat.

Weiterhin ist es bei einer erfindungsgemäßen Ladeeinheit denkbar, dass durch das Ladesteuergerät im mobilen und/oder im stationären Betriebsmodus ein bidirektionaler Energiefluss ermöglicht ist. Insbesondere kann der bidirektionale Energiefluss am Ladeanschluss und/oder am Gegenanschlusselement ermöglicht sein. Somit kann beispielsweise eine Energierückgewinnung im mobilen Betriebsmodus ermöglicht sein. Bei dem Energiefluss handelt es sich vorzugsweise um einen Stromfluss.

Weiterhin ist erfindungsgemäß ein Transportsystem aufweisend ein erfindungsgemäßes Fahrzeug und zumindest eine erfindungsgemäße Ladeeinheit beansprucht. Somit bringt ein erfindungsgemäßes Transportsystem sämtliche Vorteile mit sich, wie sie bereits ausführlich mit Bezug auf ein erfindungsgemäßes Verfahren, ein erfindungsgemäßes Fahrzeug und/oder eine erfindungsgemäße Ladeeinheit beschrieben worden sind. Das erfindungsgemäße Transportsystem ermöglicht einen vorteilhaften Betrieb des Fahrzeugs durch elektrische Energie der Ladeeinheit, wobei die Ladeeinheit gleichzeitig Teil einer dezentralen Ladeinfrastruktur sein kann. Dadurch kann eine Verteilung der Ladeeinheiten innerhalb der Ladeinfrastruktur und/oder ein Austausch der Ladeeinheit durch das Fahrzeug vereinfacht sein. Weiterhin kann das Ladesteuergerät einen Betriebsmodus zum Laden der Ladeeinheit an einer zentralen Aufladestation umfassen.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: ein erfindungsgemäßes Verfahren in schematischer Darstellung mit einem erfindungsgemäßen Fahrzeug und erfindungsgemäßen Ladeeinheiten gemäß einem ersten Ausführungsbeispiel,
- Figur 2: das erfindungsgemäße Fahrzeug mit erfindungsgemäßen Ladeeinheiten des ersten Ausführungsbeispiels in schematischer Darstellung,
- Figur 3: eine Schaltungsübersicht des erfindungsgemäßen Fahrzeugzeugs und der erfindungsgemäßen Ladeeinheiten des ersten Ausführungsbeispiels in schematischer Darstellung,
- Figur 4: ein erfindungsgemäßes Fahrzeug mit einer erfindungsgemäßen Ladeeinheit in einem weiteren Ausführungsbeispiel,
- Figur 5: eine Detailansicht eines Aufnahmebereichs eines erfindungsgemäßen Fahrzeugs in einem weiteren Ausführungsbeispiel.

In den nachfolgenden Figuren werden für die gleichen technischen Merkmale auch von unterschiedlichen Ausführungsbeispielen die identischen Bezugszeichen verwendet.

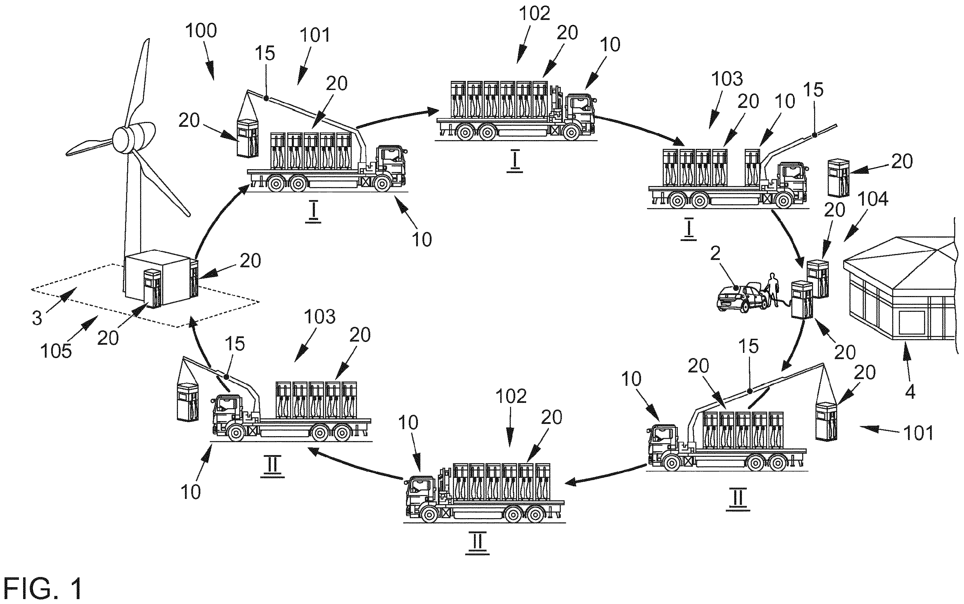

Figur 1 zeigt ein erfindungsgemäßes Verfahren 100 zur Nutzung zumindest einer erfindungsgemäßen Ladeeinheit 20 mit einem erfindungsgemäßen Fahrzeugs 10 in schematischer Darstellung der Verfahrensschritte. Im dargestellten Ausführungsbeispiel ist das Fahrzeug 10 als Verteilerfahrzeug für die Versorgung einer Ladeinfrastruktur mit erfindungsgemäßen Ladeeinheiten 20 ausgestaltet. So ist eine Aufnahme 101 von elektrischen Ladeeinheiten 20 an einer zentralen Aufladestation 3 durch das Fahrzeug 10 vorgesehen. Dazu weist das Fahrzeug 10 einen Bordkran 15 auf, durch welchen das Fahrzeug insbesondere zumindest teilweise automatisch mit vorzugsweise bis zu sechs Ladeeinheiten 20 beladen wird. Nach der Aufnahme 101 der Ladeeinheiten 20 an der zentralen Aufladestation 3 sind die Ladeeinheiten voll geladen und befinden sich somit in einem Hauptladezustand I. Die Ladeeinheiten 20 sind dazu ausgebildet, an einem Einsatzort 4 autonom zum stationären Laden von Elektrofahrzeugen 2 zu dienen. So kann es sich bei dem Einsatzort 4 um einen dezentralen Ladepunkt, beispielsweise um den Parkplatz eines Supermarktes oder dergleichen, handeln. Im Hauptladezustand I weisen die Ladeeinheiten 20 ferner ausreichend Energie für mehrere Ladevorgänge von Elektrofahrzeugen 2 auf. Vorzugsweise kann jede Ladeeinheit 20 dazu ausgebildet sein 440 kWh bereitzustellen. Um die Ladesäulen 20 zum Einsatzort 4 zu befördern erfolgt ein mobiles Betreiben 102 zumindest einer der Ladeeinheiten 20 in einem mobilen Betriebsmodus, solange die Ladeeinheiten 20 in einem Aufnahmebereich 12 des Fahrzeugs 10 platziert sind. Im mobilen Betriebsmodus stellen die Ladeeinheiten 20 elektrische Energie zur Versorgung einer elektrischen Antriebseinheit 11 des Fahrzeugs 10 zur Verfügung. Insbesondere kann das Fahrzeug 10 die Strecke von der zentralen Aufladestation 3 zum Einsatzort 4 dadurch ohne eine zusätzliche fahrzeugseitige Fahrzeugbatterie zurücklegen indem die Energiereserven der Ladeeinheiten 20 genutzt werden. Am Einsatzort 4 kann daraufhin ein Absetzen 103 zumindest einer der Ladeeinheiten 20 vom Fahrzeug 10 erfolgen, so dass die abgesetzte Ladeeinheit 20 am Einsatzort 4 als stationäre Ladesäule für Elektrofahrzeuge 2 genutzt werden kann. Dazu kann ein stationäres Betreiben 104 der abgesetzten Ladeeinheit 20 am Einsatzort 4 vorgesehen sein, wobei die Ladeeinheiten 20 jeweils ein Gehäuse 25 aufweisen, so dass auch im autonomen Betrieb ein Schutz des Energiespeichers vorhanden ist. Das Fahrzeug 10 kann ferner weitere Zielorte (nicht dargestellt) anfahren und dort weitere Ladeeinheiten 20 absetzen. Ist insbesondere durch den stationären Betrieb 104 die Ladeeinheit 20 so weit entladen, dass ein Grenzwert 21.1 des Hauptladezustands (I) erreicht oder unterschritten wird, kann die Ladeeinheit 20 das Fahrzeug 10 oder eine zentrale Leitstelle (nicht dargestellt) z.B. über eine Mobilfunkverbindung benachrichtigen, so dass die Abholung initiiert werden kann. Insbesondere kann beim Absetzen 103 ein Austausch einer Ladeeinheit 20 im Restladezustand II gegen eine Ladeeinheit 20 im Hauptladezustand I erfolgen. Somit erfolgt erneut eine Aufnahme 101 der sich nunmehr im Restladezustand II befindlichen Ladeeinheit 20 am Einsatzort 4. Durch die frühzeitige Benachrichtigung bei Erreichen oder Unterschreiten des Grenzwertes 21.1 kann die Ladeeinheit 20 im Restladezustand II noch über eine Notreserve an Restenergie verfügen, welche beim Rücktransport zur zentralen Aufladestation 3 zum Betreiben 102 der Ladeeinheit 20 im mobilen Betriebsmodus und damit zur Versorgung der Antriebseinheit 11 des Fahrzeugs 10 eingesetzt werden kann. An der zentralen Aufladestation 3 erfolgt schließlich erneut ein Absetzen 103 der Ladeeinheit 20 und ein Aufladen 105 der Ladeeinheit 20, so dass diese im Hauptladezustand I erneut an einen Einsatzort 4 gebracht werden kann. Insbesondere kann dadurch ein Ladekreislauf und damit eine Ladeinfrastruktur geschaffen werden.

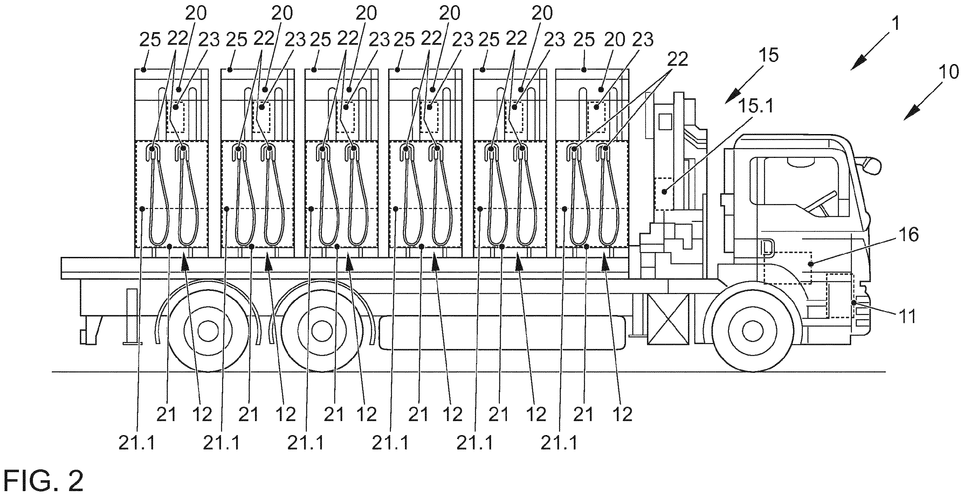

Figur 2 zeigt das Fahrzeug 10 des ersten Ausführungsbeispiels in schematischer Darstellung. Das Fahrzeug 10 weist dabei mehrere Aufnahmebereiche 12 auf, in welchen jeweils eine Ladeeinheit 20 aufgenommen ist. Somit bilden das Fahrzeug 10 und die Ladeeinheit 20 ein erfindungsgemäßes Transportsystem 1, welches gleichzeitig zum Befördern der Ladeeinheit 20 und zum Betreiben des Fahrzeugs 10 dient. Zum Aufladen 101 und Absetzen 103 der Ladeeinheiten 20 weist das Fahrzeug 10 einen Bordkran 15 auf. Vorzugsweise ist der Bordkran 15 ferner mit einer Sensoreinheit 15.1 ausgestattet, die einen optischen Sensor und/oder einen Näherungssensor zur Unterstützung eines Bedieners beim Koppeln des Bordkrans 15 mit einer der Ladeeinheiten 20 dient. Um ein Laden von Elektrofahrzeugen 2 im stationären Betriebsmodus zu ermöglichen weist jede Ladeeinheit 20 zumindest einen, vorzugsweise zwei oder mehr, Ladeanschluss 22 auf, durch welche den Elektrofahrzeugen 2 elektrische Energie in Form eines Ladestroms zum Aufladen der jeweiligen Fahrzeugbatterie zur Verfügung gestellt werden kann. Um zwischen dem mobilen und dem stationären Betriebsmodus umzuschalten weist jede Ladeeinheit 20 ferner ein Ladesteuergerät 23 auf. Weiterhin kann insbesondere durch das Ladesteuergerät 23 ein bidirektionaler Energiefluss ermöglicht sein, so dass während der Fahrt des Fahrzeugs 10, z.B. beim Bremsen, eine Energierekuperation durchgeführt werden kann, durch welche die Ladeeinheiten 20 geladen werden. Zur Bereitstellung von Energie im stationären und im mobilen Betriebsmodus weist weiterhin jede Ladeeinheit 20 einen Energiespeicher 21 auf. Dieser ist in Figur 2 schematisch mit einem Grenzwert 21.1 dargestellt, wobei der Grenzwert 21.1 den Ladezustand I, II definiert. Wird der Grenzwert 21.1 erreicht oder unterschritten, befindet sich die jeweilige Ladeeinheit 20 im Restladezustand II, in welchem nur noch eine bestimmte Menge Energie, vorzugsweise nur noch 20% oder weniger als 20% des voll geladenen Ladezustands, vorhanden ist.

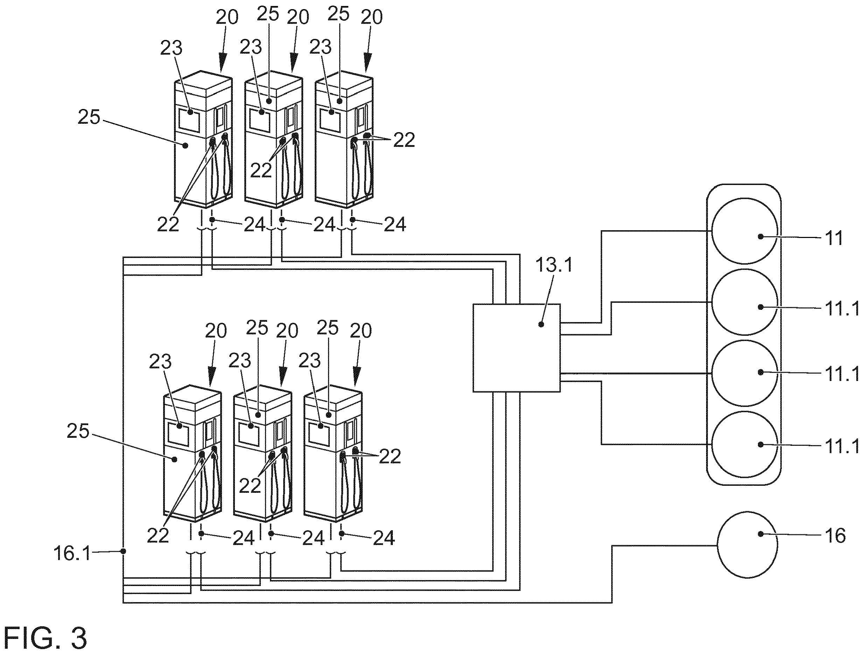

Wie in Figur 3 gezeigt stehen zum Betrieb der Ladeeinheiten 20 im mobilen Betriebsmodus die Ladesteuergeräte 23 insbesondere mit einer Steuereinheit 16 des Fahrzeugs 10 in Kommunikationsverbindung. Dabei ist durch die Steuereinheit 16 ein Energiemanagement der Ladeeinheiten 20 ermöglicht, welches ein Betreiben 102 der elektrischen Antriebseinheit 11 im Hauptladezustand I und/oder im Restladezustand II ermöglicht. Ferner kann das Energiemanagement der Steuereinheit 16 eine Verteilung der Energie bei einer Energierückgewinnung umfassen. Vorzugsweise können die Steuerleitungen 16.1, welche die Steuereinheit 16 mit den Ladeeinheiten 20 verbinden, von den Anschlussleitungen 13.1, welche die Ladeeinheiten 20 mit der Antriebseinheit 11 und/oder weiteren Verbrauchern 11.1 des Fahrzeugs 10 verbinden, zumindest bereichsweise oder vollständig separat ausgeführt sein.

Dadurch kann beispielsweise zunächst ein Signalaustausch zwischen der Steuereinheit 16 und den Ladesteuergeräten 23 stattfinden und erst bei gegenseitiger Detektion der Signale ein Stromfluss an die Antriebseinheit 11 und/oder die weiteren Verbraucher 11.1 freigegeben werden.

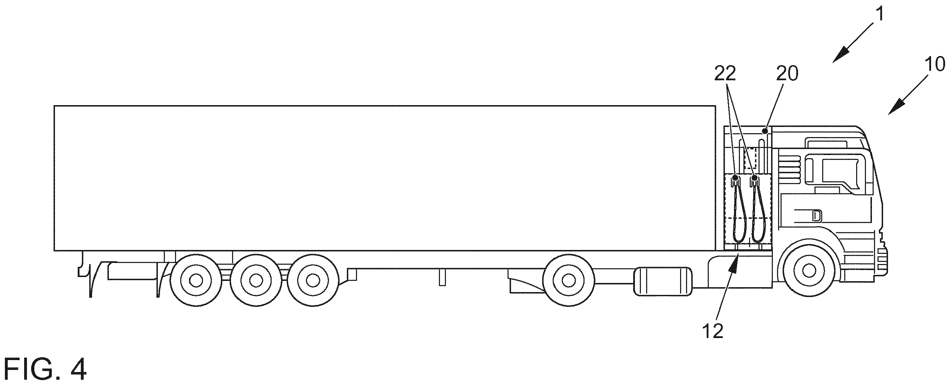

Figur 4 zeigt ein Transportsystem 1 mit einem erfindungsgemäßen Fahrzeug 10 und einer erfindungsgemäßen Ladeeinheit 20 in einem weiteren Ausführungsbeispiel. Dabei ist das Fahrzeug 10 als Langstreckentransporter ausgestaltet. Dazu weist das Fahrzeug 10 einen Aufnahmebereich 12 zur Aufnahme 101 der Ladeeinheit 20 auf, welche daraufhin zum Betreiben einer elektrischen Antriebseinheit 11, die insbesondere als Elektromotor ausgestaltet ist, eingesetzt werden kann. Insbesondere kann das Fahrzeug 10 die Ladeeinheit 20 an einem Einsatzort 4 aufnehmen, wenn diese sich noch in einem Hauptladezustand I befindet. Somit steht dem Fahrzeug 10 eine hohe Ladekapazität der Ladeeinheit 20 zur Verfügung, ohne dass das Fahrzeug 10 lange Stillstandzeiten aufgrund von langen Ladezyklen in Kauf nehmen muss. Vielmehr kann eine bereits genutzte Ladeeinheit 20 am Einsatzort 4 ausgetauscht werden, sobald diese sich in einem Restladezustand II befindet, so dass die Ladeeinheit 20 dort zur Aufladung an einer zentralen Aufladestation 3 (in Fig. 1 dargestellt) abgeholt werden kann. Insbesondere kann durch den Einsatz der Ladeeinheit 20 eine maximale Zuladung vergrößert sein, wenn entsprechend einer Gesetzesgrundlage ein Gewicht des Energiespeichers 21 nicht zur Maximallast hinzugerechnet wird.

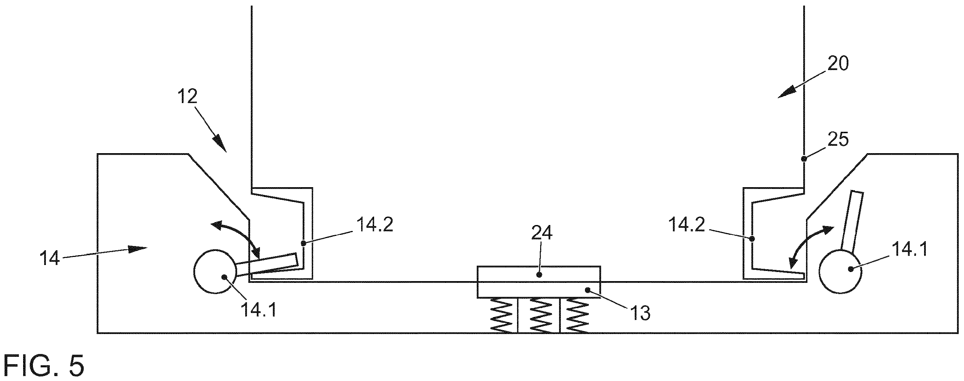

Figur 5 zeigt ferner eine Detailansicht eines Aufnahmebereichs 12 eines erfindungsgemäßen Fahrzeugs 10. In dem Aufnahmebereich 12 ist eine erfindungsgemäße Ladeeinheit 20 platziert, so dass über die Ladeeinheit 20 eine elektrische Antriebseinheit 11 des Fahrzeugs 10 betreibbar ist. Dazu weist der Aufnahmebereich 12 ein Anschlusselement 13, z.B. in Form eines federbelasteten Kontaktes, auf. Wird die Ladeeinheit 20, wie dargestellt, im Aufnahmebereich 12 platziert, wird ein Gegenanschlusselement 24, welches als Kontakt an der Unterseite der Ladeeinheit 20 ausgebildet ist, der Ladeeinheit 20 automatisch mit dem Anschlusselement 13 des Fahrzeugs 10 verbunden. Daraufhin kann über eine Steuereinheit 16 des Fahrzeugs 10 und/oder ein Ladesteuergerät 23 der Ladeeinheit 20 initiiert werden, dass Strom am Gegenanschlusselement 24 abnehmbar ist und dadurch der Antriebseinheit 11 zur Verfügung stellbar ist. Ferner weist das Fahrzeug 10 einen Verriegelungsmechanismus 14 auf, der vorzugsweise ebenfalls automatisch ausgelöst wird, wenn die Ladeeinheit 20 im Aufnahmebereich 12 platziert ist. Dazu weist der Verriegelungsmechanismus 14 Sicherungsklauen 14.1 auf, die in Ausnehmungen 14.2 eines Gehäuses 25 der Ladeeinheit 20 eingreifen können, um die Ladeeinheit 20 im Aufnahmebereich 12 insbesondere für eine Fahrt des Fahrzeuges 10 zu sichern.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: System
- 2: Elektrofahrzeug
- 3: zentrale Aufladestation
- 4: Einsatzort

- 10: Fahrzeug
- 11: Antriebseinheit
- 11.1: Verbraucher
- 12: Aufnahmebereich
- 13: Anschlusselement
- 13.1: Anschlussleitung
- 14: Verriegelungsmechanismus
- 14.1: Sicherungsklaue
- 14.2: Ausnehmung von 20
- 15: Bordkran
- 15.1: Sensoreinheit
- 16: Steuereinheit
- 16.1: Steuerleitung

- 20: Ladeeinheit
- 21: Energiespeicher
- 22: Ladeanschluss
- 23: Ladesteuergerät
- 24: Gegenanschlusselement
- 25: Gehäuse

- 100: Verfahren
- 101: Aufnahme von 20
- 102: mobiles Betreiben von 20
- 103: Absetzen von 20
- 104: stationäres Betreiben von 20
- 105: Aufladen von 20

- I: Hauptladezustand
- II: Restladezustand

## Patentansprüche

1. Verfahren (100) zur Nutzung zumindest einer Ladeeinheit (20), die zum stationären Laden von Elektrofahrzeugen (2) geeignet ist, umfassend die folgenden Schritte:
- Aufnahme (101) der Ladeeinheit (20) in einem Aufnahmebereich (12) eines Fahrzeugs (10),
- Mobiles Betreiben (102) der Ladeeinheit (20) in einem mobilen Betriebsmodus zur Versorgung einer elektrischen Antriebseinheit (11) des Fahrzeugs (10) mit elektrischer Energie durch die Ladeeinheit (20),
- Absetzen (103) der Ladeeinheit (20) vom Fahrzeug (10).

2. Verfahren (100) nach Anspruch 1,
**dadurch gekennzeichnet,**
**dass** das Verfahren (100) folgenden Schritt umfasst:
- Stationäres Betreiben (104) der Ladeeinheit (20) in einem stationären Betriebsmodus, in welchem elektrische Energie der Ladeeinheit (20) einem Elektrofahrzeug (2) zur Verfügung gestellt wird.

3. Verfahren (100) nach einem der Ansprüche 1 oder 2,
**dadurch gekennzeichnet,**
**dass** die Ladeeinheit (20) bei der Aufnahme (101) durch das Fahrzeug (10) automatisch mit einer Steuereinheit (16) und/oder der elektrischen Antriebseinheit (11) des Fahrzeugs (10) verbunden wird.

4. Verfahren (100) nach einem der vorhergehenden Ansprüche,
**dadurch gekennzeichnet,**
**dass** weitere Ladeeinheiten (20) aufgenommen und zur Energieversorgung der Antriebseinheit (11) des Fahrzeugs (10) mobil betrieben werden, wobei während des mobilen Betreibens (102) ein Energiemanagement der Ladeeinheiten (20) durchgeführt wird.

5. Verfahren (100) nach einem der vorhergehenden Ansprüche,
**dadurch gekennzeichnet,**
**dass** die Ladeeinheiten (20) einen Hauptladezustand (I), in welchem ein stationärer Ladebetrieb möglich ist, und einen Restladezustand (II), in welchem ein Grenzwert (21.1) des Hauptladezustands (I) für den stationären Ladebetrieb erreicht oder unterschritten ist, aufweisen, wobei das Energiemanagement der Ladeeinheiten (20) ein Betreiben (102) der elektrischen Antriebseinheit (11) im Hauptladezustand (I) und/oder im Restladezustand (II) ermöglicht.

6. Fahrzeug (10) aufweisend
eine elektrische Antriebseinheit (11) zum Antreiben des Fahrzeugs (10) und
einen Aufnahmebereich (12) zur Aufnahme einer Ladeeinheit (20) zum stationären Laden von Elektrofahrzeugen (2),
**dadurch gekennzeichnet,**
**dass** ein Anschlusselement (13) zum Verbinden der Ladeeinheit (20) mit der elektrischen Antriebseinheit (11) vorgesehen ist, so dass elektrische Energie der Ladeeinheit (20) durch die elektrische Antriebseinheit (11) nutzbar ist, wenn sich die Ladeeinheit (20) im Aufnahmebereich (12) befindet.

7. Fahrzeug (10) nach Anspruch 6,
**dadurch gekennzeichnet,**
**dass** der Aufnahmebereich (12) einen Verriegelungsmechanismus (14) zum Sichern der Ladeeinheit (20) aufweist und/oder dass das Anschlusselement (13) im Aufnahmebereich (12) angeordnet ist, insbesondere wobei das Anschlusselement (13) bei Aufnahme der Ladeeinheit (20) im Aufnahmebereich (12) automatisch mit der Ladeeinheit (20) verbunden wird.

8. Fahrzeug (10) nach einem der Ansprüche 6 bis 7,
**dadurch gekennzeichnet,**
**dass** ein Bordkran (15) vorgesehen ist, durch welchen die Ladeeinheit (20) im Aufnahmebereich (12) platzierbar ist, insbesondere wobei der Bordkran (15) eine Sensoreinheit (15.1) zur Unterstützung einer Kopplung des Bordkrans (15) mit der Ladeeinheit (20) aufweist.

9. Fahrzeug (10) nach einem der Ansprüche 6 bis 8,
**dadurch gekennzeichnet,**
**dass** mehrere Aufnahmebereiche (12) zur Aufnahme mehrerer Ladeeinheiten (20) vorgesehen sind, wobei jedem Aufnahmebereich (12) ein Anschlusselement (13) zugeordnet ist.

10. Fahrzeug (10) nach einem der Ansprüche 6 bis 9,
**dadurch gekennzeichnet,**
**dass** eine Steuereinheit (16) vorgesehen ist, die zum Energiemanagement der Ladeeinheit (20) ausgebildet ist, insbesondere wobei durch das Energiemanagement ein Betreiben der elektrischen Antriebseinheit (11) in einem Hauptladezustand (I) der Ladeeinheit (20), in welchem ein stationärer Ladebetrieb (20) möglich ist, und/oder in einem Restladezustand (II) der Ladeeinheit (20), in welchem ein Grenzwert (21.1) des Hauptladezustands (I) für den stationären Ladebetrieb unterschritten ist, ermöglicht ist.

11. Fahrzeug (10) nach Anspruch 10,
**dadurch gekennzeichnet,**
**dass** die Steuereinheit (16) dazu ausgebildet ist, eine Energierückgewinnung zum Laden der Ladeeinheit (20) während der Fahrt zu ermöglichen und/oder ein Verfahren nach einem der vorhergehenden Ansprüche durchzuführen.

12. Ladeeinheit (20) zum stationären Laden von Elektrofahrzeugen (2) aufweisend
einen Energiespeicher (21) zum Bereitstellen von elektrischer Energie,
einen Ladeanschluss (22) zur Kopplung des Energiespeichers (21) mit einem Elektrofahrzeug (2) und ein Ladesteuergerät (23) zum Steuern einer Energieabgabe des Energiespeichers (21) an das Elektrofahrzeug (2), wobei das Ladesteuergerät (23) einen stationären Betriebsmodus aufweist, in welchem Elektrofahrzeugen (2) am Ladeanschluss (22) elektrische Energie aus dem Energiespeicher (21) zur Verfügung stellbar ist,
**dadurch gekennzeichnet,**
**dass** die Ladeeinheit (20) durch ein Fahrzeug (10) aufnehmbar ist und das Ladesteuergerät (23) einen mobilen Betriebsmodus aufweist, in welchem der Energiespeicher (21) zum Betreiben einer elektrischen Antriebseinheit (11) des Fahrzeugs (10) dient.

13. Ladeeinheit (20) nach Anspruch 12,
**dadurch gekennzeichnet,**
**dass** die Ladeeinheit (20) ein Gegenanschlusselement (24) zum Verbinden mit einem Anschlusselement (13) des Fahrzeugs (10) aufweist, so dass der mobile Betriebsmodus über das Gegenanschlusselement (24) betreibbar ist.

14. Ladeeinheit (20) nach einem der Ansprüche 12 oder 13,
**dadurch gekennzeichnet,**
**dass** durch das Ladesteuergerät (23) im mobilen und/oder im stationären Betriebsmodus ein bidirektionaler Energiefluss ermöglicht ist.

15. Transportsystem (1) aufweisend ein Fahrzeug (10) nach einem der Ansprüche 6 bis 11 und zumindest eine Ladeeinheit (20) nach einem der Ansprüche 12 bis 14.
